# EUROPEAN PATENT SPECIFICATION

(11) **EP 2 031 499 B1**
(45) Date of publication and mention of the grant of the patent: **19.07.2017**
(21) Application number: 08163345.5
(22) Date of filing: 29.08.2008
(51) Int. Cl.: G06F 3/12

(54) **Display system, display method, and display program**
Anzeigesystem, Anzeigeverfahren und Anzeigeprogramm
Système, procédé et programme d'affichage

(30) Priority: 31.08.2007 JP 2007226441
(43) Date of publication of application: 04.03.2009
(73) Proprietor: Canon Kabushiki Kaisha, Tokyo 146-8501 (JP)
(72) Inventor: Shintoku, Hiroshi, Ohta-ku Tokyo (JP); Fujita, Tadanobu, Ohta-ku Tokyo (JP); Kurata, Yasuo, Ohta-ku Tokyo (JP); Okubo, Hiroshi, Ohta-ku Tokyo (JP); Takasaki, Tetsuhide, Ohta-ku Tokyo (JP)
(74) Representative: Garner, Jonathan Charles Stapleton

(56) References cited:
- US-A- 5 963 216
- US-A1- 2005 206 916
- US-A1- 2007 182 973

## Description

### BACKGROUND OF THE INVENTION

### Field of the Invention

The present invention relates to a display system and a display method, and more particularly to a print preview in roll paper printing.

### Description of the Related Art

A preview function is important for preventing a printing failure upon printing. In particular, an accurate preview for preventing failures is very effective for a large-format printer. This is because the large-format printer prints data on large paper and, thus, involves a high cost of paper, ink, time, etc., in case of failure.

Most existing printer drivers display a preview for checking the orientation or layout of a print image with symbols or illustrations, without using an actual image. However, a preview using an actual image is discussed in Japanese Patent Application Laid-Open No. 10-40045.

In US 5,963,216 discloses a print preview of a print job is performed. An operating system forwards to a printer driver, printing calls for the print job. The printer driver translates the printing calls to display calls for the print job. The printer driver forwards the display calls through the operating system to a display driver. The display driver displays a representation of the print job on a display.

Further, a higher-function preview has been proposed in the field of application. For example, a mechanism is proposed for acquiring information set in a printer and print settings and for displaying a preview based on such information.

Furthermore, a preview that is compatible with roll paper printing has been also proposed. More specifically, a technique of displaying a roll paper width based on information acquired from a printer driver and, in addition, accurately previewing an image with an accurate print page size, layout, or the like based on acquired print settings is discussed in Japanese Patent Application Laid-Open No. 2006-202112.

According to conventional techniques, in the case of displaying a roll paper preview as a print preview of a vertically-long original, even the first page may not entirely be displayed depending on the resolution of a screen or the like, thus resulting in a problem that the entire image of the page cannot be checked with ease.

Furthermore, even on an initial screen that is displayed at start-up of roll paper preview, the above-mentioned phenomenon may occur. Thus, visibility is low, and current settings cannot be grasped with ease, leading to a problem that an image cannot be checked and printed speedily.

Moreover, the following problems may occur. If a user intends to confirm a print preview of plural pages, a print preview of only a part of the pages may be displayed depending on the relationship between a roll paper width and paper size, so that a user cannot check a layout with ease. Accordingly, the user may find failures accompanying errors in a print layout or settings only after the completion of actual printing, and may waste paper, ink, and time.

In addition, there is a problem that a user is required to change various settings, such as display magnification, so as to check the above failures, thus consuming a lot of time.

### SUMMARY OF THE INVENTION

The present invention is directed to a display system capable of automatically displaying an entire print area in one screen and allowing a user to easily find any errors in a print image or layout setting. In addition, the present invention is directed to a display system capable of reducing printing failures accompanying errors in a print layout or setting, saving paper and ink, and improving printing efficiency.

According to a first aspect of the present invention, there is provided a display system as specified in claim 1. According to a second aspect of the present invention, there is provided a display method as specified in claim 4. According to a third aspect of the present invention, there is provided a display program as specified in claim 7.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 illustrates a display system.
Fig. 2 illustrates a general driver user interface unit used in a user interface unit illustrated in Fig. 1.
Fig. 3 illustrates a roll paper preview in a general printer driver controlled by a print preview control unit illustrated in Fig. 1.
Fig. 4 is an explanatory view illustrating a method for determining a print area.
Fig. 5 illustrates an example of a roll paper preview.
Fig. 6 illustrates a typical example of a roll paper preview according to a comparative example not within the scope of the claims.
Fig. 7 is an explanatory view illustrating a method for calculating a display magnification applied to the roll paper preview illustrated in Fig. 6.
Fig. 8 is a flowchart illustrating a main operation of the display system for displaying a roll paper preview according to the comparative example.
Fig. 9 is a flowchart illustrating an example of a method for calculating a print area according to the comparative example.
Fig. 10 illustrates a display system according to an embodiment of the present invention.
Fig. 11 illustrates an example of a roll paper preview according to the embodiment.
Fig. 12 is an explanatory view illustrating a method for calculating a print area according to the embodiment.
Fig. 13 is an explanatory view illustrating a method for calculating a display magnification applied to the roll paper preview illustrated in Fig. 11.

### DETAILED DESCRIPTION OF THE EMBODIMENTS

Various exemplary embodiments, features, and aspects of the invention will be described in detail below with reference to the drawings.

### Comparative Example

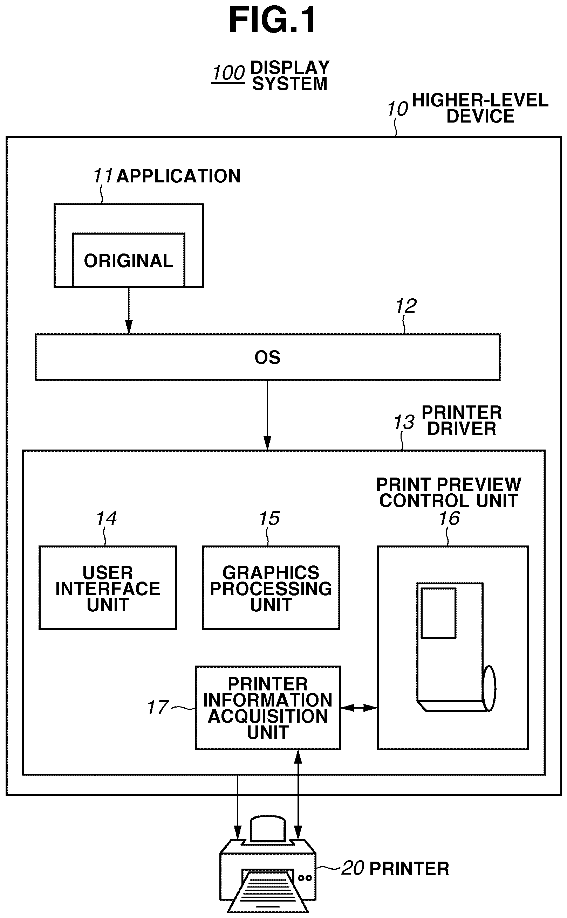

Fig. 1 illustrates a display system 100. The display system 100 includes a higher-level device 10, such as a personal computer, and a printer 20. The higher-level device 10 includes an application 11, an operating system (OS) 12, and a printer driver 13.

The printer driver 13 includes a user interface unit 14, a graphics processing unit 15, a print preview control unit 16, and a printer information acquisition unit 17. The user interface unit 14 receives input data from a user. The print preview control unit 16 controls a print preview. The printer information acquisition unit 17 acquires printer information, such as the width of set roll paper, from the printer 20. The printer 20 is a large-format inkjet image forming apparatus.

A general printing operation of the display system 100 is described next. In the higher-level device 10, the application 11 generates various types of documents. The OS 12 and the printer driver 13 operate to print the documents with the printer 20.

The application 11 acquires paper information, such as the number of pixels corresponding to a designed paper size, using a function provided by the OS 12 as print preprocessing. In response to a request for the function, the OS 12 calls a print function for initial setting that is provided by the printer driver 13 to acquire paper information and sends the acquired paper information to the application 11.

Then, the application 11 reconstructs a document based on the acquired paper information and executes print processing using the print function provided by the OS 12. If the print function is called, the OS 12 calls print functions, such as a print control function (print start, print end, etc.) and a text, graphic, and image drawing function, provided by the printer driver 13.

After such functions are called, the printer driver 13 generates print data in a format recognizable by the printer 20, and the print preview control unit 16 displays a print preview and sends the print data to the printer 20. The printer information acquisition unit 17 serves as a communication module, which is called by the printer driver 13 for acquiring various types of information from the printer 20.

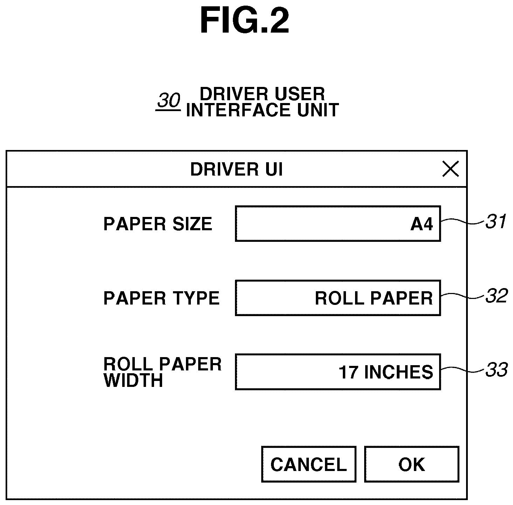

Fig. 2 illustrates a general driver user interface unit 30 that is included in the user interface unit 14 illustrated in Fig. 1. A control field 31 is used to set a paper size on the driver side. A control field 32 is used to set a paper type. A control field 33 is used to set a roll paper width.

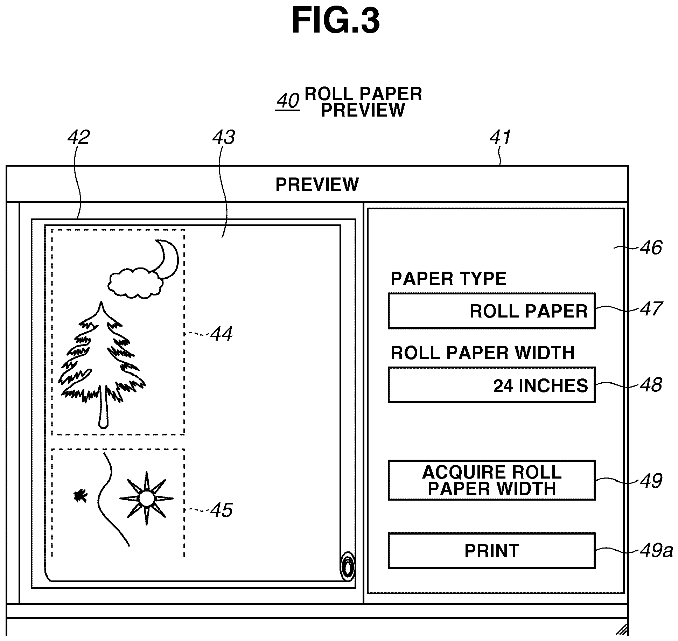

Fig. 3 illustrates a roll paper preview 40 on a general printer driver controlled by the print preview control unit 16 illustrated in Fig. 1. The displayed roll paper preview 40 includes a roll paper preview dialog 41, a preview display area 42, a roll paper image 43, a print area 44 of the first page, a print area 45 of the second page, and a display field 46 for driver setting.

Further, the displayed roll paper preview 40 includes a paper type field 47, a roll paper width field 48, a button 49, and a print button 49a. The roll paper preview dialog 41 is opened by the driver. The roll paper image 43 is displayed within the preview display area 42. The print area 44 of the first page is displayed on the roll paper image 43. The button 49 is used to acquire a roll paper width. If a user presses the button 49 at any timing, the printer information acquisition unit 17 acquires a roll paper width, which is the width of roll paper set in the printer 20.

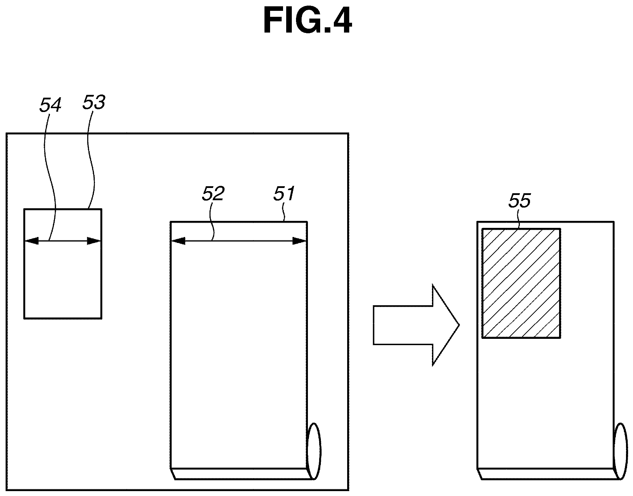

Fig. 4 is an explanatory view illustrating a method for determining a print area 55. The print area 55 is defined by locating the paper size 53, set in the printer driver, with a fixed aspect ratio on the roll paper 51.

The print area 55 can be determined based on a ratio between a roll paper width 52 and a horizontal length 54 of the paper size 53. The term "locating the paper size 53 with fixed aspect ratio" means to change the vertical length and the horizontal length of paper size at equal magnification to scale up/down a print image.

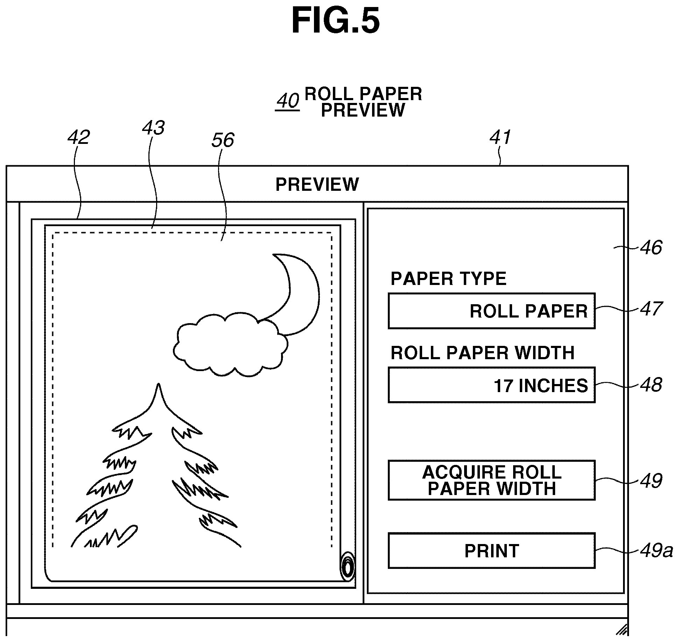

Fig. 5 illustrates an example of a roll paper preview according to the comparative example. A print area 56 illustrated in Fig. 5 differs from the print area 44 illustrated in Fig. 3 in that not the entire print area is displayed in the preview display area 42 because the ratio of the print area 55 to the roll paper width 52 in Fig. 4 has increased. In this pattern, a print area is large relative to roll paper in the case where a roll paper width is small, for example.

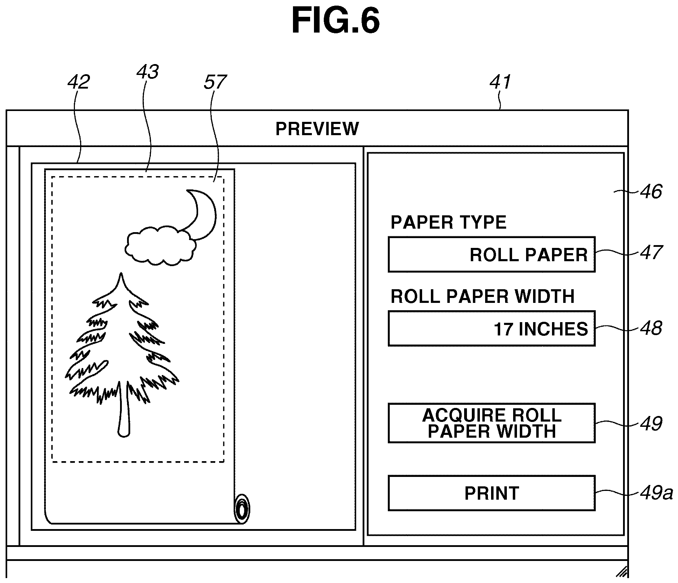

Fig. 6 illustrates a typical example of a roll paper preview according to the comparative example. In Fig. 6, the selected roll paper width 48 is the same as that illustrated in Fig. 5. However, since the roll paper image 43 and the print area 57 are displayed in reduced size, the entire print area 57 is displayed within the preview display area 42.

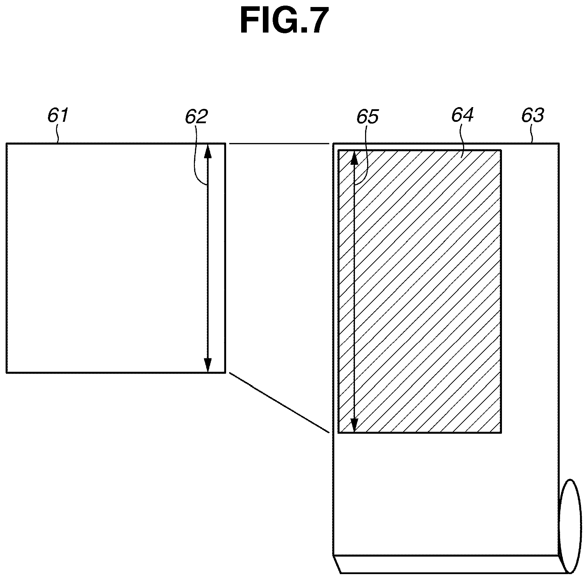

Fig. 7 is an explanatory view illustrating a method for calculating a display magnification applied to the roll paper preview illustrated in Fig. 6. Suppose that A represents the display magnification. The display magnification A satisfies a condition of "(vertical length 62 of a preview area 61) > (vertical length 65 of a print area 64) * A". The display magnification A is applied to a roll paper image 63 and the print area 64 to display the roll paper image 63 and the print area 64 as the roll paper image 43 and the print area 57 in Fig. 6. Thus, the roll paper preview illustrated in Fig. 6 can be obtained.

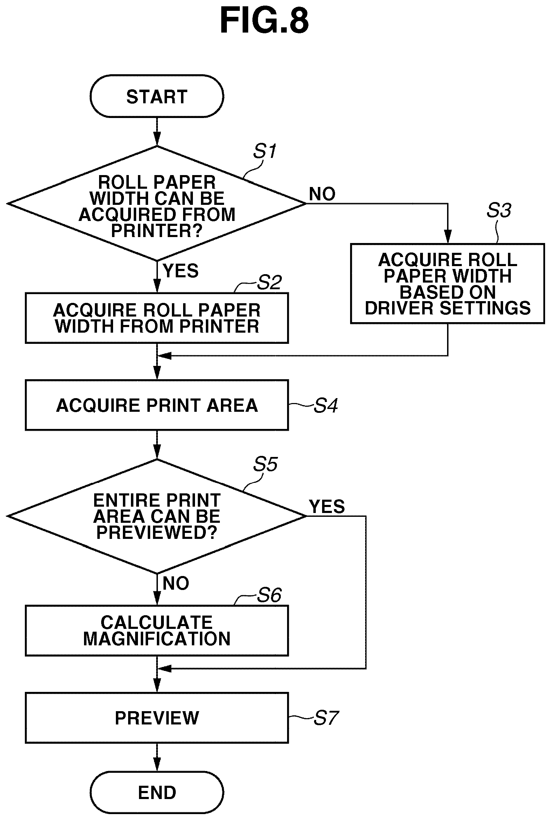

Next, detailed operations of the comparative example are described. Fig. 8 is a flowchart illustrating a main operation of the display system 100 for displaying a roll paper preview. How the printer driver 13 displays a roll paper preview upon printing a document including plural pages in the display system 100 illustrated in Fig. 1 is described.

This operation is applicable to any other systems having a roll paper preview function as well as the printer driver 13. In the comparative example, this operation is executed at start-up of a roll paper preview.

When a roll paper preview function is performed, in step S1, the printer driver 13 determines whether a roll paper width can be acquired from the printer 20. If a roll paper width can be acquired from the printer 20 (YES in step S1), then in step S2, the printer driver 13 acquires a roll paper width with the printer information acquisition unit 17. If a roll paper width cannot be acquired from the printer 20 (NO in step S1), then in step S3, the printer driver 13 uses a roll paper width preset with the driver user interface unit 30 illustrated in Fig. 2. Next, in step S4, the printer driver 13 acquires the print area 44 of the first page.

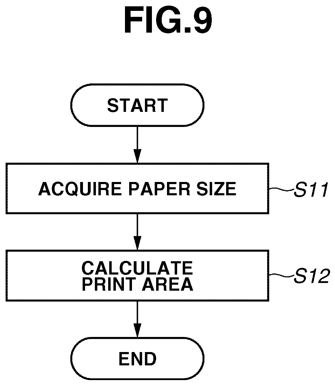

Fig. 9 is a flowchart illustrating an example of a method for calculating a print area. The printer driver 13 acquires a selected paper size in step S11, and calculates a print area in step S12. The processing in step S12 is illustrated in detail in Fig. 4. The acquired paper size corresponds to the paper size 53. The printer driver 13 determines the print area 55 based on the acquired roll paper width 52, paper size 53, and horizontal length 54 of the paper size 53, as illustrated in Fig. 4.

Consider the case of maximizing the roll paper width in the display area 42 at start-up of a roll paper preview. In this case, the determined print area of the first page may entirely be displayed in the preview display area 42 like the print area 44 of the first page illustrated in Fig. 3.

A lower portion of the print area 56 may not be displayed as illustrated in Fig. 5 depending on the acquired roll paper width and paper size. In step S5, the printer driver 13 determines whether the entire print area of the first page can be displayed as described above. If the entire area can be displayed (YES in step S5), then in step S7, the printer driver 13 displays a roll paper preview as illustrated in Fig. 3.

If not the entire print area can be displayed (NO in step S5), then in step S6, the printer driver 13 determines a display magnification required to display the entire print area. Fig. 7 illustrates an example of a method of calculating the display magnification.

As described above, the printer driver 13 compares the vertical length 65 of the print area 64 with the vertical length 62 of the preview area 61 to calculate a display magnification. When the calculated display magnification is applied to the roll paper image 63 and the print area 64, the roll paper image 43 and the print area 57 are displayed as illustrated in Fig. 6.

In other words, the entire print area 56, a part of which is not displayed in the case illustrated in Fig. 5, is displayed as the print area 57 as illustrated in Fig. 6. As a result, a print layout is recognizable at a glance. The display system 100 is a driver of a personal computer (PC) for illustrative purposes, but can be a system for generating a preview with a printing apparatus body and displaying the preview on the screen of a PC with a browser.

### Embodiment

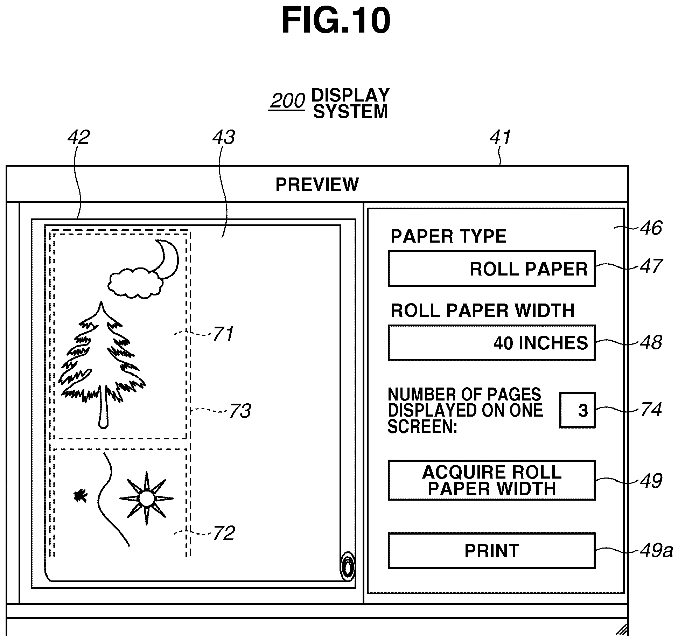

Fig. 10 illustrates a display system 200 according to an embodiment of the present invention. In the embodiment, plural pages are selected as a preview print area. The components and operations of the comparative example as illustrated in Figs. 1 to 7 are similar to those of this embodiment.

In the display system 200 illustrated in Fig. 10, a print preview 71 of the first page of an original to be printed, a print preview 72 of the second page, and a print preview 73 of plural pages are displayed. In a field 74 for designating the number of display pages, the number of pages displayed on one screen at a time is set. Plural pages can be selected based on a method other than the method described in this embodiment. In this example, the number of pages is set to 3.

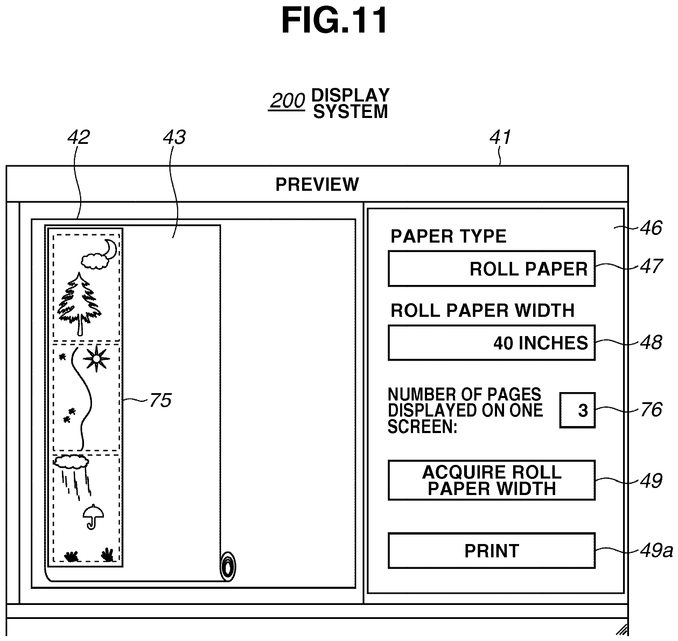

Fig. 11 illustrates an example of a roll paper preview according to this embodiment. The entire print area 75 is displayed on the roll paper image 43 displayed in the preview display area 42. In the example illustrated in Fig. 11, images corresponding to three pages are displayed.

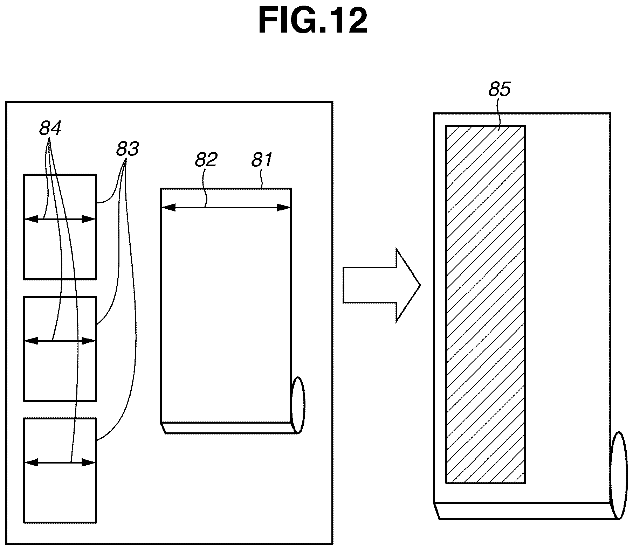

Fig. 12 is an explanatory view illustrating a method for calculating a print area according to the second exemplary embodiment. In this embodiment, plural pages are selected as a target print area. Here, three pages are selected as a print area 85. The print area 85 is defined by locating three pages of paper size 83 with fixed aspect ratio on a roll paper 81. The print area 85 can be calculated based on a ratio between a roll paper width 82 and the horizontal length 84 of the paper size 83.

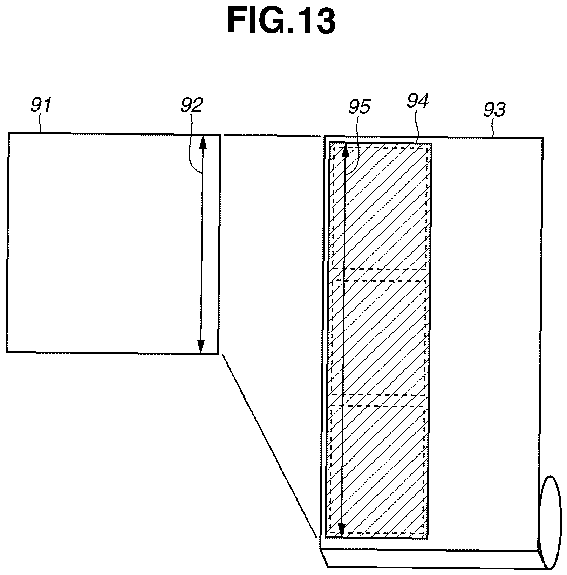

Fig. 13 is an explanatory view illustrating a method for calculating a display magnification applied to the roll paper preview illustrated in Fig. 11. Suppose that B represents the display magnification. The display magnification B satisfies a condition of " (vertical length 92 of a preview area 91) > (vertical length 95 of a print area 94) * B".

When the display magnification B is applied to a roll paper image 93 and the print area 94, the roll paper image 93 and the print area 94 are displayed as the roll paper image 43 and the print area 75 in Fig. 11. Thus, the roll paper preview illustrated in Fig. 11 can be obtained.

Referring to the flowchart illustrated in Fig. 8, this embodiment is described in detail below. In this embodiment, the printer driver 13 previews a roll paper image upon printing a document including plural pages in the display system 200. However, this operation is applicable to all systems having a roll paper preview function as well as the printer driver 13.

If a roll paper preview is executed, first, in step S1, the printer driver 13 determines whether a roll paper width can be acquired from the printer 20. If a roll paper width can be acquired from the printer 20 (YES in step S1), then in step S2, the printer driver 13 acquires a roll paper width with the printer information acquisition unit 17.

If a roll paper width cannot be acquired from the printer main body (NO in step S1), then in step S3, the printer driver 13 uses a roll paper width preset by the driver user interface unit 30 illustrated in Fig. 2.

In this embodiment, the number of pages to be previewed at a time is set in the field 74 illustrated in Fig. 10 for designating the number of display pages. In this example, the number of pages is set to 3. Next, in step S4, the printer driver 13 acquires a print area corresponding to the selected pages.

Further, in step S11 illustrated in Fig. 9, the printer driver 13 acquires a selected paper size, and calculates a print area in step S12. The processing in step S12 is illustrated in detail in Fig. 12. The printer driver 13 determines the print area 85 based on the acquired roll paper width 82, paper size 83, and horizontal length 84 of the paper size 83 as illustrated in Fig. 12.

Here, consider the case of maximizing a roll paper width in the preview display area 42 at start-up of a roll paper preview. In this case, the calculated print area 85 including plural pages may not entirely be displayed, like the print preview 72 of the second page of the original illustrated in Fig. 10, depending on the acquired roll paper width and paper size. In step S5, the printer driver 13 determines whether the entire print area can be displayed.

If the entire print area can be displayed (YES in step S5), then in step S7, the printer driver 13 displays a roll paper preview. If not the entire print area can be displayed (NO in step S5), then in step S6, the printer driver 13 determines a display magnification required to display the entire print area.

Fig. 13 illustrates an example of a method of determining the display magnification. The printer driver 13 compares the vertical length 95 of the print area 94 with the vertical length 92 of the preview area 91 to determine a display magnification. When the determined display magnification is applied to the roll paper image 93 and the print area 94, the roll paper image 43 and the print area 75 illustrated in Fig. 11 are displayed.

As a result, as illustrated in Fig. 11, the entire print area 75 including plural pages is displayed. Thus, a print layout is recognizable at a glance.

According to the embodiment, the preview magnification (scaling) of a roll paper image and a print area is controlled based on a roll paper width and a paper size. Accordingly, the entire print area can be automatically displayed on one screen, and a user can easily find any errors in a print image or layout setting.

Furthermore, since the entire area of the first page of an original can be displayed at start-up of print preview, or plural pages selected by a user can be displayed on one screen, visibility is dramatically improved. In other words, a user can speedily confirm whether a printing result satisfies a user's requirement.

Moreover, the above-described high-visibility print preview can reduce a print error that would occur due to any error in a print layout or settings, save paper and ink, and enhance printing efficiency. While the above-described embodiment is applied to a preview function performed by a printer driver, they are applicable to a preview function performed by an application program.

Additionally, the above-described embodiment is applicable to the case where a printer body is provided with a display device to display a preview. Furthermore, the above-described embodiment is applicable to a print system including a PC and a printer body, which generates a preview with the printer body and displays the preview on the PC.

While the present invention has been described with reference to embodiments, it is to be understood that the invention is not limited to the disclosed exemplary embodiments. reference to exemplary embodiments, it is to be understood that the invention is not limited to the disclosed exemplary embodiments. The scope of the following claims is to be accorded the broadest interpretation.

## Claims

1. A display system (100, 200) configured to display a print preview (40) of a roll paper image and a print area to be printed on a roll paper, the display system comprising:
acquisition means configured to acquire a roll paper width of the roll paper on which a plurality of pages are to be printed(52, S1, S2, S3), and a horizontal length of a designated paper size (54) and a number of pages to be previewed;
first determination means configured to determine a print area (75) corresponding to the plurality of pages to be printed based on the acquired roll paper width and the acquired horizontal length of the designated paper size (S4, S12) and the number of pages to be previewed;
second determination means configured to determine a display magnification of the roll paper image and the print area required to display the entire print area located within the roll paper image and the full width of the roll paper image in a preview area according to a vertical length of the print area (S6) and a vertical length of the preview area; and
display control means configured to preview the roll paper image (43) and the entire print area (57) in the preview area based on the determined display magnification.

2. A display system according to claim 1, wherein the acquisition means is configured to acquire the roll paper width from a printing apparatus (S2) or to acquire a set value of a printer driver as the roll paper width (S3), and
wherein if the roll paper width cannot be acquired from the printing apparatus, the acquisition means is configured to acquire the roll paper width based on a set value of the printer driver.

3. A display system according to any preceding claim, wherein if a print preview of a plurality of pages is to be displayed, the acquisition means is configured to acquire a horizontal length of a first page (S11) for setting the print area (S12) at start-up of the print preview.

4. A display method for displaying a print preview of a roll paper image and a print area to be printed on a roll paper, the display method comprising:
acquiring a roll paper width of the roll paper on which a plurality of pages are to be printed(52, S1, S2, S3) and a horizontal length of a designated paper size (S11) and a number of pages to be previewed;
determining a print area (55) corresponding to the plurality of pages to be printed based on the acquired roll paper width and the acquired horizontal length of the designated paper size and the number of pages to be previewed;
determining a display magnification of the roll paper image and print area required to display the entire print area located within the roll paper image and the full width of the roll paper image in a preview area (S6) according to a vertical length of the print area and a vertical length of the preview area; and
previewing the roll paper image and the entire print area in the preview area based on the determined display magnification.

5. A display method according to claim 4 further comprising:
acquiring the roll paper width from a printing apparatus (S2) or acquiring a set value of a printer driver as the roll paper width (S3); and
if the roll paper width cannot be acquired from the printing apparatus, acquiring the roll paper width based on a set value of the printer driver.

6. A display method according to claim 4 or 5, further comprising, if a print preview of a plurality of pages is to be displayed, acquiring a horizontal length of a first page for setting the print area at start-up of the print preview (S12).

7. A program for causing a computer to perform the display method according to any one of claims 4 to 6.

## Patentansprüche

1. Anzeigesystem (100, 200), das konfiguriert ist, eine Druckvorschau (40) eines Rollenpapierbilds und eines auf einem Rollenpapier zu druckenden Druckbereichs anzuzeigen, wobei das Anzeigesystem umfasst:
eine Erfassungseinrichtung, die konfiguriert ist, eine Rollenpapierbreite des Rollenpapiers, auf dem mehrere Seiten gedruckt werden sollen (52, S1, S2, S3), und eine horizontale Länge einer ausgewiesenen Papiergröße (54) und eine Anzahl Seiten, für die eine Vorschau durchgeführt werden soll, zu erfassen;
eine erste Bestimmungseinrichtung, die konfiguriert ist, einen den mehreren zu druckenden Seiten entsprechenden Druckbereich (75) basierend auf der erfassten Rollenpapierbreite und der erfassten horizontalen Länge der ausgewiesenen Papiergröße (S4, S12) und der Anzahl Seiten, für die eine Vorschau durchgeführt werden soll, zu bestimmen;
eine zweite Bestimmungseinrichtung, die konfiguriert ist, gemäß einer vertikalen Länge des Druckbereichs (S6) und einer vertikalen Länge des Vorschaubereichs eine Anzeigevergrößerung des Rollenpapierbilds und des Druckbereichs zu bestimmen, die benötigt wird, um den innerhalb des Rollenpapierbilds liegenden gesamten Druckbereich und die volle Breite des Rollenpapierbilds in einem Vorschaubereich anzuzeigen; und
eine Anzeigesteuereinrichtung, die konfiguriert ist, basierend auf der bestimmten Anzeigevergrößerung eine Vorschau des Rollenpapierbilds (43) und des gesamten Druckbereichs (57) im Vorschaubereich durchzuführen.

2. Anzeigesystem nach Anspruch 1,
wobei die Erfassungseinrichtung konfiguriert ist, die Rollenpapierbreite von einer Druckvorrichtung (S2) zu erfassen oder als die Rollenpapierbreite (S3) einen eingestellten Wert eines Druckertreibers zu erfassen, und
wobei, falls die Rollenpapierbreite nicht von der Druckvorrichtung erfasst werden kann, die Erfassungseinrichtung konfiguriert ist, die Rollenpapierbreite basierend auf einem eingestellten Wert des Druckertreibers zu erfassen.

3. Anzeigesystem nach einem vorhergehenden Anspruch,
wobei, falls eine Druckvorschau einer Mehrzahl Seiten angezeigt werden soll, die Erfassungseinrichtung konfiguriert ist, beim Anlaufen der Druckvorschau eine horizontale Länge einer ersten Seite (S11) zum Einstellen des Druckbereichs (S12) zu erfassen.

4. Anzeigeverfahren zum Anzeigen einer Druckvorschau eines Rollenpapierbilds und eines auf einem Rollenpapier zu druckenden Druckbereichs, wobei das Anzeigeverfahren umfasst:
Erfassen einer Rollenpapierbreite des Rollenpapiers, auf dem mehrere Seiten gedruckt werden sollen (52, S1, S2, S3), und einer horizontalen Länge einer ausgewiesenen Papiergröße (S11) und einer Anzahl Seiten, für die eine Vorschau durchgeführt werden soll;
Bestimmen eines den mehreren zu druckenden Seiten entsprechenden Druckbereichs (55) basierend auf der erfassten Rollenpapierbreite und der erfassten horizontalen Länge der ausgewiesenen Papiergröße und der Anzahl Seiten, für die eine Vorschau durchgeführt werden soll;
Bestimmen einer Anzeigevergrößerung des Rollenpapierbilds und Druckbereichs, die benötigt wird, um den innerhalb des Rollenpapierbilds liegenden gesamten Druckbereich und die volle Breite des Rollenpapierbilds in einem Vorschaubereich (S6) anzuzeigen, gemäß einer vertikalen Länge des Druckbereichs und einer vertikalen Länge des Vorschaubereichs; und
Durchführen einer Vorschau des Rollenpapierbilds und des gesamten Druckbereichs im Vorschaubereich basierend auf der bestimmten Anzeigevergrößerung.

5. Anzeigeverfahren nach Anspruch 4, weiterhin umfassend:
Erfassen der Rollenpapierbreite von einer Druckvorrichtung (S2) oder Erfassen eines eingestellten Werts eines Druckertreibers als die Rollenpapierbreite (S3); und
falls die Rollenpapierbreite nicht von der Druckvorrichtung erfasst werden kann, Erfassen der Rollenpapierbreite basierend auf einem eingestellten Wert des Druckertreibers.

6. Anzeigeverfahren nach Anspruch 4 oder 5,
weiterhin umfassend, falls eine Druckvorschau mehrerer Seiten angezeigt werden soll, Erfassen einer horizontalen Länge einer ersten Seite zum Einstellen des Druckbereichs beim Anlaufen der Druckvorschau (S12).

7. Programm, um einen Computer zu veranlassen, das Anzeigeverfahren nach einem der Ansprüche 4 bis 6 durchzuführen.

## Revendications

1. Système d'affichage (100, 200) configuré pour afficher un aperçu avant impression (40) d'une image sur papier en rouleau et d'une zone d'impression à imprimer sur un papier en rouleau, le système d'affichage comprenant:
un moyen d'acquisition configuré pour acquérir une largeur de papier en rouleau du papier en rouleau sur lequel une pluralité de pages doivent être imprimées (52, S1, S2, S3), et une longueur horizontale d'un format de papier désigné (54) et d'un nombre de pages à prévisualiser ;
un premier moyen de détermination configuré pour déterminer une zone d'impression (75) correspondant à la pluralité de pages à imprimer sur la base de la largeur de papier en rouleau acquise et de la longueur horizontale acquise du format de papier désigné (S4, S12) et du nombre de pages à prévisualiser ;
un deuxième moyen de détermination configuré pour déterminer un grossissement d'affichage de l'image sur papier en rouleau et de la zone d'impression requis pour afficher la totalité de la zone d'impression située à l'intérieur de l'image sur papier en rouleau et toute la largeur de l'image sur papier en rouleau dans une zone de prévisualisation selon une longueur verticale de la zone d'impression (S6) et une longueur verticale de la zone de prévisualisation ; et
un moyen de commande d'affichage configuré pour prévisualiser l'image sur papier en rouleau (43) et la totalité de la zone d'impression (57) dans la zone de prévisualisation sur la base du grossissement d'affichage déterminé.

2. Système d'affichage selon la revendication 1, dans lequel le moyen d'acquisition est configuré pour acquérir la largeur de papier en rouleau à partir d'un appareil d'impression (S2) ou pour acquérir une valeur définie d'un pilote d'imprimante comme étant la largeur de papier en rouleau (S3), et
dans lequel, si la largeur de papier en rouleau ne peut pas être acquise à partir de l'appareil d'impression, le moyen d'acquisition est configuré pour acquérir la largeur de papier en rouleau sur la base d'une valeur définie du pilote d'imprimante.

3. Système d'affichage selon l'une des revendications précédentes, dans lequel, si un aperçu avant impression d'une pluralité de pages doit être affiché, le moyen d'acquisition est configuré pour acquérir une longueur horizontale d'une première page (S11) pour définir la zone d'impression (S12) au démarrage de l'aperçu avant impression.

4. Procédé d'affichage pour afficher un aperçu avant impression d'une image sur papier en rouleau et d'une zone d'impression à imprimer sur un papier en rouleau, le procédé d'affichage comprenant le fait :
d'acquérir une largeur de papier en rouleau du papier en rouleau sur lequel une pluralité de pages doivent être imprimées (52, S1, S2, S3) et une longueur horizontale d'un format de papier désigné (S11) et d'un nombre de pages à prévisualiser ;
de déterminer une zone d'impression (55) correspondant à la pluralité de pages à imprimer sur la base de la largeur de papier en rouleau acquise et de la longueur horizontale acquise du format de papier désigné et du nombre de pages à prévisualiser ;
de déterminer un grossissement d'affichage de l'image sur papier en rouleau et de la zone d'impression requis pour afficher la totalité de la zone d'impression située à l'intérieur de l'image sur papier en rouleau et toute la largeur de l'image sur papier en rouleau dans une zone de prévisualisation (S6) selon une longueur verticale de la zone d'impression et une longueur verticale de la zone de prévisualisation ; et
de prévisualiser l'image sur papier en rouleau et la totalité de la zone d'impression dans la zone de prévisualisation sur la base du grossissement d'affichage déterminé.

5. Procédé d'affichage selon la revendication 4, comprenant en outre le fait :
d'acquérir la largeur de papier en rouleau à partir d'un appareil d'impression (S2) ou d'acquérir une valeur définie d'un pilote d'imprimante comme étant la largeur de papier en rouleau (S3) ; et
d'acquérir, si la largeur de papier en rouleau ne peut pas être acquise à partir de l'appareil d'impression, la largeur de papier en rouleau sur la base d'une valeur définie du pilote d'imprimante.

6. Procédé d'affichage selon la revendication 4 ou 5, comprenant en outre le fait d'acquérir, si un aperçu avant impression d'une pluralité de pages doit être affiché, une longueur horizontale d'une première page pour définir la zone d'impression au démarrage de l'aperçu avant impression (S12).

7. Programme pour amener un ordinateur à mettre en oeuvre le procédé d'affichage selon l'une quelconque des revendications 4 à 6.
